(19) Europäisches Patentamt
European Patent Office
Office européen des brevets

(11) **EP 2 381 716 B1**

(12) **EUROPEAN PATENT SPECIFICATION**

(45) Date of publication and mention
of the grant of the patent:
**18.06.2014 Bulletin 2014/25**

(51) Int Cl.:
*H04W 28/00* (2009.01)     *H04L 1/16* (2006.01)
*H04W 72/04* (2009.01)     *H04L 1/18* (2006.01)

(21) Application number: **09832956.8**

(22) Date of filing: **21.12.2009**

(86) International application number:
**PCT/CN2009/075752**

(87) International publication number:
**WO 2010/069274 (24.06.2010 Gazette 2010/25)**

(54) **METHOD, SYSTEM AND DEVICE FOR TRANSMITTING FEEDBACK INFORMATION**

VERFAHREN, SYSTEM UND VORRICHTUNG ZUR ÜBERTRAGUNG VON RÜCKKOPPLUNGSINFORMATIONEN

PROCÉDÉ, SYSTÈME ET DISPOSITIF POUR TRANSMETTRE DES INFORMATIONS DE RÉTROACTION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.12.2008 CN 200810239864**

(43) Date of publication of application:
**26.10.2011 Bulletin 2011/43**

(73) Proprietor: **China Academy of Telecommunications Technology Haidian District, Beijing 100191 (CN)**

(72) Inventors:
• **XING, Yanping**
  **Beijing 100083 (CN)**
• **LI, Xiaoka**
  **Beijing 100083 (CN)**
• **JIA, Minli**
  **Beijing 100083 (CN)**
• **LIU, Yawei**
  **Beijing 100083 (CN)**

(74) Representative: **Tanty, François et al Cabinet Nony 3, rue de Penthièvre 75008 Paris (FR)**

(56) References cited:
**CN-A- 101 114 868     CN-A- 101 123 470
CN-A- 101 188 486**

• CATT ET AL: "Addition of signature sequence group information for the E-HICH related to non-scheduled transmisson in 1.28Mcps TDD mode", 3GPP DRAFT; R2-071348, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070322, 22 March 2007 (2007-03-22), XP050134294, [retrieved on 2007-03-22]
• TD TECH ET AL: "TR25.929 Text proposal on Uplink transmission Simulation and Explicit", 3GPP DRAFT; R1-084147 TR25.929 TEXT PROPOSAL ON UPLINK TRANSMISSION SIMULATION AND EXPLICIT STATE SWITCH MECHANISM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC, vol. RAN WG1, no. Prague, 4 November 2008 (2008-11-04), XP050597109, [retrieved on 2008-11-04]
• TD TECH: "E-AGCH structure in CPC for 1.28Mcps TDD", 3GPP DRAFT; R1-084150 E-AGCH STRUCTURE IN CPC FOR 1.28MCPS TDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050317446, [retrieved on 2008-11-04]

- **NOKIA CORPORATION ET AL: "Draft CR to TS 25.331 â Introduction of UTRAN to E-UTRAN interworking", 3GPP DRAFT; R2-081052 CR_ 25331_V810_E-UTRAN_INTERWORKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080211 - 20080215, 15 February 2008 (2008-02-15), XP050603592, [retrieved on 2008-02-15]**

## Description

This application claims priority to Chinese Patent Application No. 200810239864.3, filed with the State Intellectual Property Office of the People's Republic of China on December 19, 2008 and entitled "Method, system and device for transmitting feedback information", which is hereby incorporated by reference in its entirety.

## Field of the Invention

The present invention relates to the field of communications and particularly to a method, system and device for transmitting feedback information.

## Background of the Invention

The High Speed Uplink Packet Access (HSUPA) is an enhanced uplink solution proposed by the Third Generation Partnership Project (3GPP) for the purpose of maximizing an uplink throughput in a policy of sharing a code channel resource, a power resource, etc.

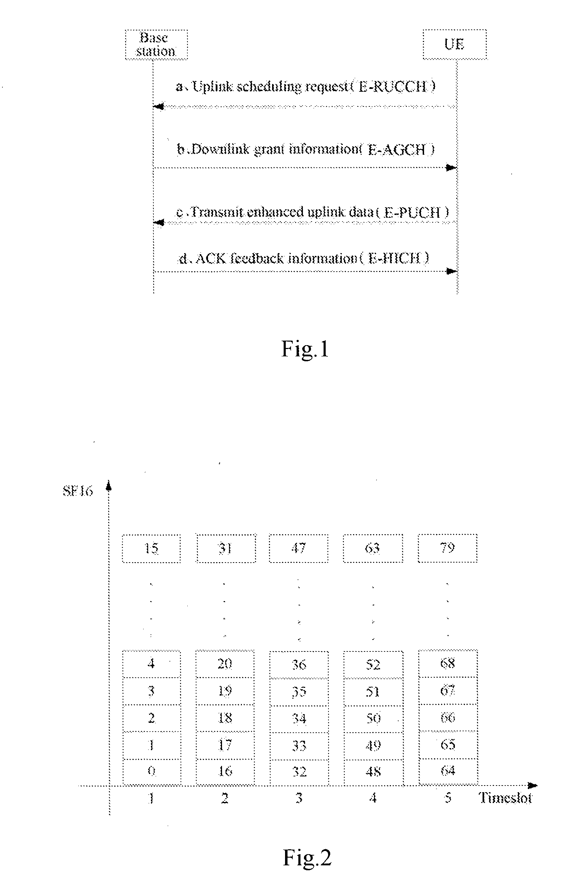

HSUPA data transmission includes scheduled transmission and non-scheduled transmission. A flow of scheduled transmission is as illustrated in Fig. 1.

a. A UE has enhanced uplink data in a buffer for transmission and transmits an E-DCH (Enhanced Dedicated Channel) Random access Uplink Control Channel (E-RUCCH) to request for resource scheduling.

b. A base station schedules a resource in response to the received scheduling request information and transmits resource grant information on an E-DCH Absolute Grant Channel (E-AGCH).

c. The UE selects an Enhanced-Transport Format Combination (E-TFC) of an appropriate Transport Block Size (TBS) and a modulation scheme in response to the received resource scheduling information and thereafter performs encoding and modulation and transmits the enhanced uplink data on an E-DCH Physical Uplink Channel (E-PUCH).

d. The base station performs a decoding process upon reception of the E-PUCH, derives ACK/NACK information from a check of CRC and encodes and maps the ACK/NACK information onto an E-DCH HARQ (Hybrid Automatic Repeat reQuest) acknowledge Indicator Channel (E-HICH) to feed back to the UE.

Thus the UE has finished data transmission for a scheduled transmission process.

The E-HICH for feedback is indicated by a 2-bit E-HICH Indicator (EI) on the E-AGCH. Specifically, at most four E-HICHs are configured for the UE and numbered respectively at the network side in Radio Resource Control (RRC) signaling to indicate information on allocated physical resources and training sequences (midambles) of the respective E-HICHs. The base station indicates the one of the E-HICHs for feedback of ongoing transmission by the EI on the E-AGCH.

ACK/NACK is encoded on the E-HICH by XOR of the 1-bit ACK or NACK information and an 80-bit orthogonal sequence resulting from a physical resource occupied by the E-PUCH and a fixed randomizing process. Specifically, an 80-order orthogonal matrix C80 is specified in a protocol, and a row of an 80-bit sequence ($C80_{,r'n}$) is taken from the orthogonal matrix for ACK/NACK coding, where r' represents the $r'^{th}$ row of the 80-order orthogonal matrix and is derived in a randomizing process as $r' = P(r, SFN', MidambleCode)$, where SFN' represents a system sub-frame number of the E-HICH, MidambleCode represents a fundamental midamble code sequence specified for a cell, and P represents a pseudorandom sequence.

r represents a logic resource tag ID and has a mapping relationship with the physical resource occupied by the E-PUCH:

$$r = 16(t_0 - 1) + (q_0 - 1)\frac{16}{Q_0}$$

Where:

$t_0$ is the last (highest-numbered) allocated timeslot (1,2,..,5);
$q_0$ is the lowest-numbered channelization code index allocated in timeslot to (1,2,...,$Q_0$); and
$Q_0$ is the spreading factor of the lowest-numbered channelization code index allocated in timeslot to.

The mapping relationship between the logical resource tag ID and the physical resource occupied by the E-PUCH is as illustrated in Fig. 2.

During non-scheduled transmission in the HSUPA, unlike scheduled transmission, it is not necessary to wait until the base station allocates a physical resource on the E-AGCH, but an E-PUCH resource is preconfigured and notified at the network side to the UE. Also the UE is configured at the network side with an E-HICH for feedback and notified of an allocated physical resource and midamble of the E-HICH and the serial number of a group of signature sequences in use. The serial number k of the group of signature sequences ranges from 0 to 19. A group of signature sequences includes four orthogonal sequences including the $4*k^{th}$, $4*k+1^{th}$, $4*k+2^{th}$ and $4*k+3^{th}$ rows of the 80-order orthogonal matrix. The UE transmits the uplink data directly on the E-PUCH allocated at the network side and receives the feedback of ACK/NACK as well as Transmit Power Control (TPC) and a Synchronization Shift (SS) for the E-PUCH from the base station on the configured E-HICH.

Here the ACK/NACK and the TPC and SS are encoded in the following scheme.

80 orthogonal sequences are divided into 20 groups, each of which includes four sequences with consecutive logic resource tag IDs. The 80 orthogonal sequences is equivalent to the same 80-order orthogonal matrix C80 as for scheduled transmission. For a non-scheduled transmission UE, a group of sequences may be allocated thereto from an upper layer to represent a Hybrid Automatic Repeat reQuest (HARQ) acknowledge indicator (ACK/NACK) and a TPC/SS command. The first code among the four sequences (the code with the lowest logic resource identifier ID) represents a ACK/NACK message, and one of the remaining three sequences represents implicitly a TPC/SS command.

In the existing HSUPA technology, different E-HICHs are used for scheduled transmission and non-scheduled transmission, that is, E-HICHs configured in a cell are divided into a scheduling type of E-HICH and a non-scheduling type of E-HICH. Only the ACK/NACK is carried on the scheduling type of E-HICH, and for feedback of scheduled transmission for a UE, the base station determines, from the physical resource of the scheduling E-PUCH allocated for the UE, an orthogonal sequence for encoding and then encodes and feeds back it to the UE on the scheduling type of E-HICH indicated by the EI. The TPC and SS command for the E-PUCH are carried on a non-scheduling type of E-HICH in addition to the ACK/NACK. A non-scheduling type of E-HICH and a group of signature sequences are pre-allocated at the network side for a non-scheduled transmission UE. For feedback of non-scheduled transmission for the UE, the base station performs encoding with the group of orthogonal sequences allocated for the UE in the scheme of encoding the ACK/NACK and the TPC and SS for non-scheduled transmission and feeds them back to the UE on the non-scheduling type of E-HICH.

In a study of Continuous Packet Connectivity (CPC) for HSPA+ (enhanced 3GPP HSPA), a semi-persistent scheduling allocation method has been introduced to better support VoIP (Voice on IP) transmission. That is, the base station allocates to the UE a semi-persistent physical resource, with a specific repeating cycle, by transmitting an E-AGCH. Thereafter the base station may further transmit an E-AGCH to adjust allocation of the semi-persistent resource to the UE. Prior to adjusting, the UE may transmit uplink data directly on the semi-persistent resource allocated by the base station and receives a feedback on the E-HICH. Since the base station will not transmit an E-AGCH command for each scheduled transmission any more, the TPC and the SS for the E-PUCH have to be carried on the E-HICH. Therefore a feedback has to be made in a mode of non-scheduled transmission, that is, an E-HICH physical resource for feedback and a group of signature sequences are preconfigured at the network side for the UE.

A control channel onhead is reduced in this semi-persistent scheduling allocation method, and a larger number of VoIP UEs can be supported in a cell by allocating a semi-persistent resource. In order to feed back an HARQ acknowledge indicator and the TPC and SS, a non-scheduling type of E-HICH and a group of signature sequences have to be preconfigured for each VoIP UE and notified to the UE in RRC signaling. If two UEs are configured with the same E-HICH and the same group of signature sequences, the base station can not schedule both of the UEs concurrently in the same TTI, thus limiting flexible scheduling. If the allocated group of signature sequences or E-HICH varies from one UE to another, at least two non-scheduling type of E-HICHs have to be configured when there are more than 20 UEs in a cell because of at most 20 groups of codes available to a non-scheduling E-HICH, which may occupy an increased control channel resource and consequently reduce a physical resource for data transmission, thus degrading the throughout of a system.

CATT ET AL: "Addition of signature sequence group information for the E-HICH related to non-scheduled transmission in 1.28Mcps TDD mode", 3GPP DRAFT; R2-071348 discloses: it has been agreed in RANI that for non-Scheduled transmission, E-HICHs carry not only the HARQ acknowledgement indicators but also TPC and SS commands; the 80 signature sequences are divided into 20 groups while each group includes 4 sequences; every non-scheduled user is assigned only one group which are signaled by higher layer; so it's necessary to add the signature sequence group information for the E-HICH related to non-scheduled transmission in 1.28Mcps TDD mode; and the IE "Signature Sequence Group Index" is added for the E-HICH related to non-scheduled transmission in 1.28Mcps TDD mode.

TD TECH ET AL: "TR25.929 Text proposal on Uplink transmission Simulation and Explicit", 3GPP DRAFT; R1-084147 discloses semi-persistent scheduling in uplink, where long term resource assignment is introduced in uplink and the assignment is adjusted by NodeB dynamically, so that E-HICH for non-schedule E-DCH shall be used in case of long term resource assignment.

**Summary of the Invention**

Embodiments of the invention provide a method, system and device for transmitting feedback information to alleviate a demand for a non-scheduling E-HICH and save a physical resource.

To this end, the embodiments of the invention provide the following technical solutions.

A method for transmitting feedback information includes:

> allocating and notifying at the network side an E-HICH of the type of scheduled transmission to a UE; and
> for feedback of non-scheduled transmission or semi-persistent transmission for the UE, carrying corresponding feedback information on the E-HICH of the type of scheduled transmission in a feedback scheme of non-scheduled transmission;
> wherein carrying the corresponding feedback information on the E-HICH of the type of scheduled transmission in the feedback scheme of non-scheduled transmission comprises:

determining signature sequences of scheduled transmissions and a group of signature sequences of non-scheduled transmissions; and encoding the feedback information using the group of signature sequences in an encoding scheme for feedback of non-scheduled transmission and carrying the encoded feedback information on the E-HICH of the type of scheduled transmission for transmission.

A system for transmitting feedback information includes:

a channel allocation unit configured to allocate and notify an E-HICH of the type of scheduled transmission to a UE;

a feedback information transmission unit, for feedback of non-scheduled transmission or semi-persistent transmission for the UE, configured to carry corresponding feedback information on the E-HICH of the type of scheduled transmission in a feedback scheme of non-scheduled transmission; and

a group-of-signature sequences determination unit configured to determine a group of signature sequences of non-scheduled transmissions;

wherein the feedback information transmission unit comprises:

an encoding sub-unit configured to encode the feedback information using the group of signature sequences in an encoding scheme for feedback of non-scheduled transmission; and

a carrying sub-unit configured to carry the encoded feedback information on the E-HICH of the type of scheduled transmission for transmission.

A user equipment includes:

a channel reception unit configured to receive an E-HICH of the type of scheduled transmission on which feedback information of non-scheduled transmission or semi-persistent transmission is carried;

a group of signature sequences acquisition unit configured to acquire as instructed from the network side a corresponding group of signature sequences of non-scheduled transmission; and

a decoding unit configured to decode the received E-HICH of the type of scheduled transmission using the group of signature sequences to acquire the corresponding feedback information of non-scheduled transmission or semi-persistent transmission.

In the method, system and device for transmitting feedback information according to the embodiments of the invention, both a feedback of an HARQ acknowledge of scheduled transmission and a feedback of an HARQ acknowledge and transmission of TPC and SS messages of non-scheduled transmission can be performed concurrently on the same E-HICH so that the E-HICH of the type of scheduled transmission can be shared between scheduled transmission and non-scheduled transmission to thereby reduce a demand for configuring a non-scheduling E-HICH and consequently save a physical resource for use to improve a throughout of a cell effectively.

**Brief Description of the Drawings**

Fig. 1 is a flow chart of scheduled transmission in an HSUPA system in the prior art;

Fig. 2 is a schematic diagram of a corresponding relationship between a logic resource tag ID and an E-PUCH in the prior art;

Fig. 3 is a flow chart of a method for transmitting feedback information according to an embodiment of the invention;

Fig. 4 is a flow chart of another method for transmitting feedback information according to an embodiment of the invention;

Fig. 5 is a schematic structural diagram of a system for transmitting feedback information according to an embodiment of the invention; and

Fig. 6 is a schematic structural diagram of a user equipment according to an embodiment of the invention.

**Detailed Description of the Embodiments**

The embodiments of the invention will be further described in details hereinafter with reference to the drawings and the embodiments to help those skilled in the art better understand of the solutions in the embodiments of the invention.
In a method for transmitting feedback information according to an embodiment of the invention, an E-HICH of the type of scheduled transmission is allocated and notified at the network side to a UE, and for feedback of non-scheduled transmission or semi-persistent transmission for the UE, corresponding feedback information is carried on the E-HICH of the type of scheduled transmission in a feedback scheme of non-scheduled transmission so that feedback information of non-scheduled transmission or semi-persistent transmission and feedback information of scheduled transmission is transmitted on the same E-HICH of the type of scheduled transmission and the E-HICH of the type of scheduled transmission is shared between scheduled transmission and non-scheduled transmission to thereby save a physical resource and improve a throughout of a cell.

In order to carry the corresponding feedback information on the E-HICH of the type of scheduled transmission in the feedback scheme of non-scheduled transmission, a group of signature sequences for feedback of non-scheduled transmission may be determined, and the information may be encoded with the group of signature sequences on the E-HICH of the type of scheduled transmission in an encoding scheme for feedback of non-scheduled transmission.

There is a specific mapping relationship between a signature sequence in use and a physical resource of a scheduling E-PUCH for feedback of scheduled transmission. There are timeslots 1 to 5, each of which corresponds to 16 orthogonal sequences, and there are 80 orthogonal sequences in total. For a system supporting a larger number of VoIP UEs, uplink and downlink resources are configured relatively symmetrically due to symmetry of the service, that is, among six timeslots excluding the timeslot 0, the uplink or the downlink may not occupy five timeslots. A Radio Network Controller (RNC) may configure a base station with a pool of E-PUCH resources, i.e., physical resources that can be occupied by scheduling and non-scheduling E-PUCHs. A cell is typically configured with less than five timeslots as an E-PUCH. Without changing a feedback scheme of scheduled transmission, the number of orthogonal sequences required on the E-HICH of scheduled transmission will be less than 80, which is the product of 16 and the number of timeslots as an E-PUCH.

In the method according to an embodiment of the invention, these idle orthogonal codes are used as the group of signature sequences for feedback of non-scheduled transmission or semi-persistent transmission.

In an embodiment of the invention, a group of signature sequences for feedback of non-scheduled transmission may be determined in a variety of approaches, for example, in an approach where a group of non-scheduling signature sequences is pre-allocated or where it is determined from the E-PUCH physical resource. Of course, the invention will not be limited to this embodiment, but a group of signature sequences for feedback of non-scheduled transmission may be determined in another approach.

Embodiments of the invention will be described in details below in connection with different determination approaches.

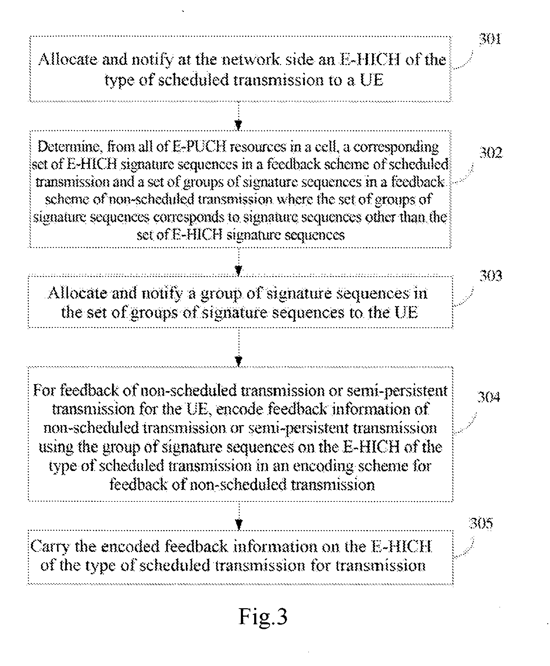

Reference is made to Fig. 3 illustrating a flow chart of a method for transmitting feedback information according to an embodiment of the invention, which includes the following steps.

The step 301 is to allocate and notify at the network side an E-HICH of the type of scheduled transmission to a UE.

The step 302 is to determine, from all of E-PUCH resources in a cell, a corresponding set of E-HICH signature sequences in a feedback scheme of scheduled transmission and a set of groups of signature sequences in a feedback scheme of non-scheduled transmission where the set of groups of signature sequences corresponds to signature sequences other than the set of E-HICH signature sequences.

The step 303 is to allocate and notify a group of signature sequences in the set of groups of signature sequences to the UE.

For feedback of non-scheduled transmission or semi-persistent transmission for the UE, the step 304 is to encode feedback information of non-scheduled transmission or semi-persistent transmission using the group of signature sequences on the E-HICH of the type of scheduled transmission in an encoding scheme for feedback of non-scheduled transmission.

The step 305 is to carry the encoded feedback information on the E-HICH of the type of scheduled transmission for transmission.

For example, a cell is configured with four uplink timeslots, i.e., timeslots 1 to 4 respectively, and two downlink timeslots, i.e., timeslots 5 and 6 respectively. Also an uplink control channel is configured at the timeslot 1, and the timeslots 2-4 used for an E-PUCH resource. As in the scheme of encoding an HARQ acknowledge indicator of scheduled transmission in the prior art, a logic resource tag ID is represented with r which may take a value ranging from 16 to 63 resulting in 48 orthogonal sequences in total, and the other 32 orthogonal sequence codes with r is 0 to 15 and 64 to 79 will not be used for feedback of scheduled transmission. These orthogonal sequences may be used at the network side for feedback of semi-persistent transmission and represented as the group of signature sequences in the feedback scheme of non-scheduled transmission, and a corresponding relationship between the serial number of this group and the orthogonal sequences is the same as in the prior art. In this example, the serial number of the group of signature sequences may range from 0 to 3 and 16 to 19.

The UE is preconfigured at the network side with an E-HICH and a group of signature sequences through Radio Resource Control (RRC) signaling. The E-HICH is an E-HICH of the type of scheduled transmission, and the group of signature sequences is the 16th group (corresponding to the 64th to 67th codes). This E-HICH may also be allocated at the network side to another scheduling UE, and also the 0th to 3rd and 17th to 19th groups of signature sequences and the same E-HICH may be allocated to other semi-persistent scheduling or non-scheduled transmission UEs.

For feedback of semi-persistent scheduling or non-scheduled transmission for the UE, the base station represents ACK or NACK in the 64th orthogonal sequence and TPC and SS in one of the 65th to 67th orthogonal sequences in the feedback scheme of non-scheduled transmission. This feedback scheme is applicable for both feedback of any semi-persistent transmission and feedback of any non-scheduled transmission for the UE.

Furthermore, the scenario in which the base station schedules the UE in a new E-AGCH format on which no EI is carried and allocates a physical resource of only one Transmission Time Interval (TTI) to the UE may be regarded as a specific example of semi-persistent transmission. In this scenario, the base station may feed back only the ACK or NACK in the 64th codeword on the E-HICH and carry the TPC and the SS on the E-AGCH.

For feedback to the scheduled transmission UE on the E-HICH of the type of scheduled transmission, the base station determines from occupancy of E-PUCH resources one of the orthogonal codes for use and then performs corresponding encoding for feedback on the E-HICH of the type of scheduled transmission in the feedback scheme of scheduled transmission in the prior art.

Apparently with the method according to the embodiment of the invention, both feedback information of scheduled transmission and feedback information of non-scheduled transmission or semi-persistent transmission can be carried on a single E-HICH of the type of scheduled transmission to thereby save a physical resource effectively.

For example, if a cell is configured with four uplink timeslots as an E-PUCH and three downlink timeslots, as well as an E-HICH of the type of scheduled transmission and an E-HICH of the type of non-scheduled transmission, different groups of orthogonal codes may be allocated to at most 24 UEs so that an HARQ acknowledge as well as TPC and SS can be feed back in the non-scheduling feedback scheme while also supporting feedback requirements of scheduled transmission. If a cell is configured with three uplink timeslots as an E-PUCH and four downlink timeslots, different groups of orthogonal codes may be allocated to at most 28 UEs so that an HARQ acknowledge as well as TPC and SS can be feed back in the non-scheduling feedback scheme while also supporting feedback requirements of scheduled transmission under the same configuration condition by using the method according to the embodiment of the invention.

In this embodiment, the UE is notified at the network side of the determined group of signature sequences and thus may decode the received E-HICH of the type of scheduled transmission using the group of signature sequences and acquire the corresponding feedback information.

Of course, the UE may not necessarily determine whether the received E-HICH is an E-HICH of the type of scheduled transmission, an E-HICH of the type of non-scheduled transmission or an E-HICH of semi-persistent transmission, and therefore in an application of the method of the embodiment of the invention, the UE may simply decode the received E-HICH using the notified group of signature sequences on the corresponding E-HICH as notified from the network side and derive the feedback information of non-scheduled transmission or semi-persistent transmission to thereby achieve better compatibility with the prior art without any significant modification to existing devices and effectively save a cost of the devices.

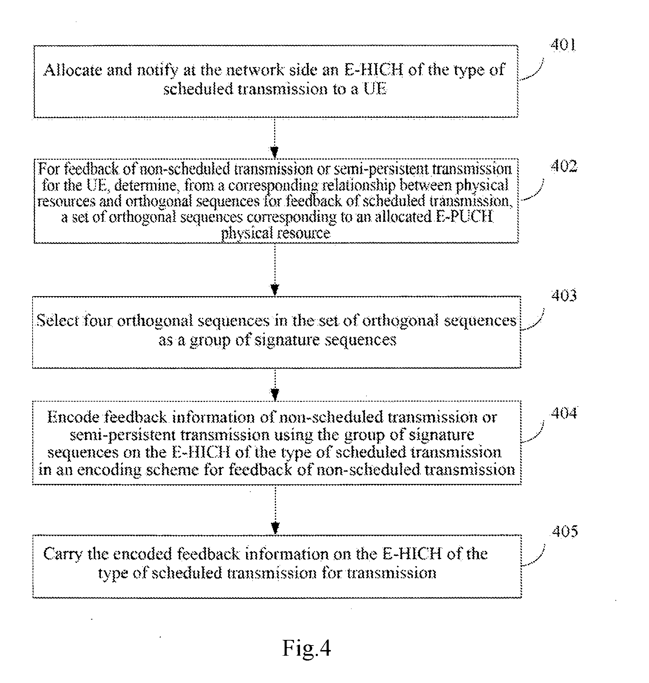

Reference is made to Fig. 4 illustrating a flow chart of another method for transmitting feedback information according to an embodiment of the invention, which includes the following steps.

The step 401 is to allocate and notify at the network side an E-HICH of the type of scheduled transmission to a UE.

For feedback of non-scheduled transmission or semi-persistent transmission for the UE, the step 402 is to determine, from a corresponding relationship between physical resources and orthogonal sequences for feedback of scheduled transmission, a set of orthogonal sequences corresponding to an allocated E-PUCH physical resource.

The step 403 is to select four orthogonal sequences in the set of orthogonal sequences as a group of signature sequences.

The step 404 is to encode feedback information of non-scheduled transmission or semi-persistent transmission using the group of signature sequences on the E-HICH of the type of scheduled transmission in an encoding scheme for feedback of non-scheduled transmission.

The step 405 is to carry the encoded feedback information on the E-HICH of the type of scheduled transmission for transmission.

For example, a spreading factor of a code channel allocated for a semi-persistent resource or non-scheduled transmission is defined less or equal to 4, i.e., equivalent to four virtual code channels with a spreading factor of 16. For feedback of any semi-persistent transmission and any non-scheduled transmission for the UE, corresponding orthogonal sequences are determined from a corresponding relationship between E-PUCH physical resources and orthogonal sequences for feedback of scheduled transmission in view of occupancy of the resources, and there are at least four corresponding orthogonal sequences due to the spreading factor defined less or equal to 4. If there are more than four orthogonal sequences corresponding to the resources, four orthogonal sequences may be selected therefrom at the network side as the group of signature sequences for feedback of semi-persistent scheduling or non-scheduled transmission. A selection rule may be predefined or decided and notified at the network side to the UE.

For feedback of semi-persistent scheduling or non-scheduled transmission of the UE, the base station encodes information for feedback using the group of signature sequences in the encoding scheme for feedback of non-scheduled transmission and feeds it back in a feedback scheme of non-scheduled transmission.

Furthermore, when the base station schedules the UE in a new E-AGCH format on which no EI is carried and allocates a physical resource of only one TTI to the UE, the base station may feed back only the ACK or NACK on the E-HICH and carry the TPC and the SS on the E-AGCH. A signature sequence for encoding the ACK/NACK may be specified as the one in the group of signature sequences with the lowest serial number or decided and notified at the network side to the UE.

In this embodiment, the set of orthogonal sequences corresponding to the E-PUCH physical resources is determined at the network side from the corresponding relationship between E-PUCH physical resources and orthogonal sequences for feedback of scheduled transmission, and four orthogonal sequences are selected therefrom as the group of signature sequences. In this embodiment, the selected four orthogonal sequences may not necessarily be notified at the network side to the UE but instead may be determined at the network side and the UE side respectively from the E-PUCH physical resources. If there are more than four orthogonal sequences corresponding to the E-PUCH physical resources, four orthogonal sequences, for example, with lower serial numbers, may be prescribed between the network side and the UE for use, or a selection rule may be notified at the network side to the UE. Thus, the UE determines from the corresponding relationship between physical resources and orthogonal sequences for feedback of scheduled transmission the set of orthogonal sequences corresponding to the allocated E-PUCH physical resources and then selects as prescribed with the network side four orthogonal sequences in the set of orthogonal sequences as the group of signature sequences. The UE decodes the received E-HICH of the type of scheduled transmission using the group of signature sequences and acquires the corresponding feedback information.

Apparently with the method of the embodiment of the invention, both feedback information of scheduled transmission and feedback information of non-scheduled transmission or semi-persistent transmission in which an EI or no EI is carried on the E-AGCH can be carried on a single E-HICH of the type of scheduled transmission. For non-scheduled transmission, the corresponding feedback information includes the ACK or NACK and the TPC and SS, and for semi-persistent transmission, if no EI information is carried on the E-AGCH and a physical resource of only one TTI is allocated to the UE, the corresponding feedback information includes the ACK or NACK; otherwise, the corresponding feedback information includes the ACK or NACK and the TPC and SS, thereby saving a physical resource effectively and improving a throughout of a cell.

Of course, the UE may not necessarily determine whether the received E-HICH is an E-HICH of the type of scheduled transmission, an E-HICH of the type of non-scheduled transmission or an E-HICH of semi-persistent transmission, and therefore in an application of the method of the embodiment of the invention, the UE may decide as prescribed in the system or notified from the network side whether determine a group of signature sequences upon reception of the E-HICH during semi-persistent scheduling or non-scheduled transmission, decode the received E-HICH using the group of signature sequences and derive the feedback information of non-scheduled transmission or semi-persistent transmission to thereby achieve better compatibility with the prior art without any significant modification to existing devices and effectively save a cost of the devices.

Those ordinarily skilled in the art can appreciate that all or a part of the steps in the method according to the foregoing embodiments of the invention can be performed in program instructing relevant hardware, which may be stored in a computer readable storage medium, e.g., an ROM/RAM, a magnetic disk, an optical disk.

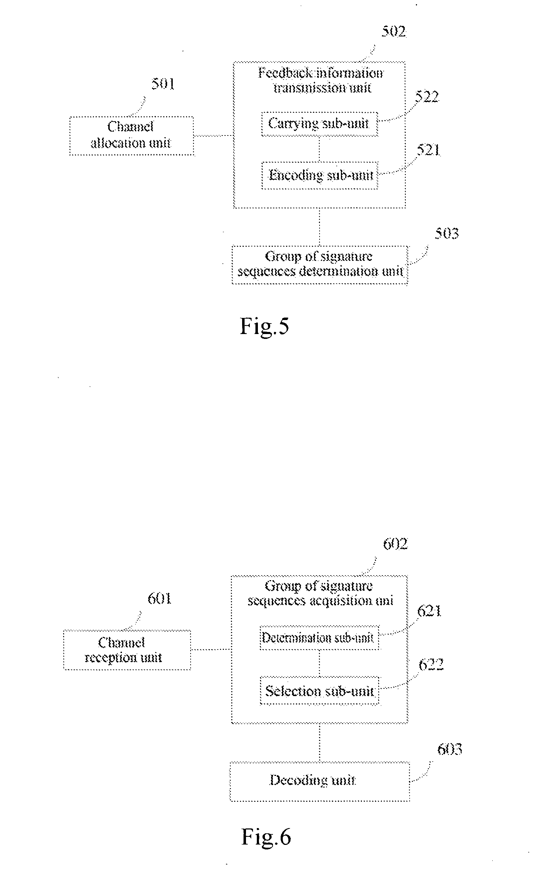

An embodiment of the invention further provides a system for transmitting feedback information, a schematic structural diagram of which is as illustrated in Fig. 5.

The system includes a channel allocation unit 501 and a feedback information transmission unit 502.

The channel allocation unit 501 is configured to allocate and notify an E-HICH of the type of scheduled transmission to a UE, and the feedback information transmission unit 502 is configured to carry corresponding feedback information on the E-HICH of the type of scheduled transmission for the UE in a feedback scheme of non-scheduled transmission for feedback of non-scheduled transmission or semi-persistent transmission.

In a practical application, the channel allocation unit 501 may be located on an RNC, and the feedback information transmission unit 502 may be located on a base station. In the system according to this embodiment, both feedback information of scheduled transmission and feedback information of non-scheduled transmission or semi-persistent transmission in which an EI or no EI is carried on the E-AGCH can be carried on a single E-HICH of the type of scheduled transmission to thereby save a physical resource effectively.

In this embodiment, the system may further include a group-of signature sequences determination unit 503 configured to determine a group of signature sequences.

The feedback information transmission unit 502 may include an encoding sub-unit 521 and a carrying sub-unit 522. The encoding sub-unit 521 is configured to encode the feedback information using the group of signature sequences in an encoding scheme for feedback of non-scheduled transmission, and the carrying sub-unit 522 is configured to carry the encoded feedback information on the E-HICH of the type of scheduled transmission for transmission.

In a practical application, the group of signature sequences determination unit 503 may be located on the RNC or the base station, which will be described below respectively.

When the group of signature sequences determination unit 503 is located on the RNC, the group of signature sequences determination unit 503 may include a set of groups of signature sequences determination sub-unit and a group of signature sequences allocation sub-unit (not illustrated). Particularly, the set of groups of signature sequences determination sub-unit is configured to determine, from all of E-PUCH resources in a cell, a corresponding set of E-HICH signature sequences in a feedback scheme of scheduled transmission and a set of groups of signature sequences in the feedback scheme of non-scheduled transmission where the set of groups of signature sequences corresponds to signature sequences other than the set of E-HICH signature sequences, and the group of signature sequences allocation sub-unit is configured to allocate to the UE a group of signature sequences in the set of groups of signature sequences.

In this case, the system may further include a group of signature sequences notification unit (not illustrated) configured to notify the UE of the group of signature sequences allocated by the group of signature sequences allocation sub-unit to the UE.

For a process for transmitting feedback information in the system according to the embodiment of the invention, reference can be made to the flow illustrated in Fig. 3, and a detailed description thereof will be omitted here.

When the group of signature sequences determination unit 503 is located on the base station, the group of signature sequences determination unit 503 may include a set of orthogonal sequences determination sub-unit and a group of signature sequences selection sub-unit (not illustrated). Particularly, the set of orthogonal sequences determination sub-unit is configured to determine, from a corresponding relationship between physical resources and orthogonal sequences for feedback of scheduled transmission, a set of orthogonal sequences corresponding to an allocated E-PUCH physical resource, and the group of signature sequences selection sub-unit is configured to select four orthogonal sequences in the set of orthogonal sequences as the group of signature sequences.

For a process for transmitting feedback information in the system according to the embodiment of the invention, reference can be made to the flow illustrated in Fig. 4, and a detailed description thereof will be omitted here.

Of course, in the system for transmitting feedback information according to the embodiment of the invention, the group of signature sequences determination unit 503 will not be limited to the foregoing two structures but can be structured otherwise dependent upon a practical application environment.

In the system according to the embodiment of the invention, for non-scheduled transmission or semi-persistent transmission, corresponding feedback information may be carried on a single E-HICH of the type of scheduled transmission so that the E-HICH can be shared for the feedback information between scheduled transmission and non-scheduled transmission to thereby effectively save a physical resource and improve a throughout of a cell.

The system according to the embodiment of the invention can be applicable for both feedback of any semi-persistent transmission and feedback of any non-scheduled transmission for the UE. Furthermore, when the base station schedules the UE in a new E-AGCH format on which no EI is carried and allocates a physical resource of only one TTI to the UE, the base station may feed back only the ACK or NACK on the E-HICH and carry the TPC and the SS on the E-AGCH. That is, for non-scheduled transmission, the feedback information carried on the E-HICH of the type of scheduled transmission includes the ACK or NACK and the TPC and SS, and for semi-persistent transmission, if no EI information is carried on the E-AGCH and a physical resource of only one TTI is allocated to the UE, the feedback information carried on the E-HICH of the type of scheduled transmission includes the ACK or NACK; otherwise, the corresponding feedback information includes the ACK or NACK and the TPC and SS.

An embodiment of the invention provides a user equipment, a schematic structural diagram of which is as illustrated in Fig. 6.

The user equipment includes a channel reception unit 601, a group of signature sequences acquisition unit 602 and a decoding unit 603. Particularly, the channel reception unit 601 is configured to receive an E-HICH of the type of scheduled transmission on which feedback information of non-scheduled transmission or semi-persistent transmission is carried, the group of signature sequences acquisition unit 602 is configured to acquire as instructed from the network side a corresponding group of signature sequences of non-scheduled transmission, and the decoding unit 603 is configured to decode the received E-HICH of the type of scheduled transmission using the group of signature sequences to acquire the corresponding feedback information of non-scheduled transmission or semi-persistent transmission.

In this embodiment, the group of signature sequences acquisition unit 602 includes a determination sub-unit 621 and a selection sub-unit 622. Particularly, the determination sub-unit 621 is configured to determine, from a corresponding relationship between physical resources and orthogonal sequences for feedback of scheduled transmission, a set of orthogonal sequences corresponding to an E-PUCH physical resource allocated from the network side, and the selection sub-unit 622 is configured to select as prescribed with the network side four orthogonal sequences in the set of orthogonal sequences as the group of signature sequences.

Of course, the group of signature sequences acquisition unit 602 will not be limited to this structure but may alternatively acquire the group of signature sequences of non-scheduled transmission, for example, as notified from the network side.

In the user equipment according to the embodiment of the invention, corresponding feedback information of non-scheduled transmission or semi-persistent transmission can be acquired on the E-HICH of the type of scheduled transmission when the E-HICH is shared for feedback information between scheduled transmission and non-scheduled transmission to thereby effectively save a physical resource and improve a throughout of a cell.

The embodiments of the invention have been described in details as above, the invention has been set forth in this context in connection with the embodiments thereof, and the foregoing description of the embodiments is merely intended to facilitate understanding of the method and device according to the invention; and those ordinarily skilled in the art can make modifications to the embodiments and their application scopes without departing from the scope of the invention, and accordingly the disclosure of the invention shall not be constructed as limiting the scope of the invention.

**Claims**

1. A method for transmitting feedback information, the method comprises:

   allocating and notifying at the network side an E-HICH of the type of scheduled transmission to a UE; and
   for feedback of non-scheduled transmission or semi-persistent transmission for the UE, carrying corresponding feedback information on the E-HICH of the type of scheduled transmission in a feedback scheme of non-scheduled transmission;
   wherein carrying the corresponding feedback information on the E-HICH of the type of scheduled transmission in the feedback scheme of non-scheduled transmission comprises:

      determining signature sequences of scheduled transmissions and a group of signature sequences of non-scheduled transmissions; and
      encoding the feedback information using the group of signature sequences in an encoding scheme for feedback of non-scheduled transmission and carrying the encoded feedback information on the E-HICH of the type of scheduled transmission for transmission.

2. The method of claim 1, wherein determining the group of signature sequences comprises:

   determining at the network side, from all of E-HICH physical resources in a cell, a corresponding set of E-HICH signature sequences in a feedback scheme of scheduled transmission and a set of groups of signature sequences in the feedback scheme of non-scheduled transmission, wherein the set of groups of signature sequences corresponds to signature sequences other than the set of E-HICH signature sequences; and
   allocating and notifying to the UE a group of signature sequences in the set of groups of signature sequences.

3. The method of claim 2, further comprising:

   decoding, by the UE, the received E-HICH of the type of scheduled transmission using the group of signature sequences as notified from the network side and acquiring the corresponding feedback information.

4. The method of claim 1, wherein determining the group of signature sequences comprises:

   determining at the network side, from a corresponding relationship between physical resources and orthogonal sequences for feedback of scheduled transmission, a set of orthogonal sequences corresponding to an allocated E-PUCH physical resource; and
   selecting four orthogonal sequences in the set of orthogonal sequences as the group of signature sequences.

5. The method of claim 4, further comprising:

   determining, by the UE, from the corresponding relationship between physical resources and orthogonal sequences for feedback of scheduled transmission the set of orthogonal sequences corresponding to the allocated E-PUCH physical resource;
   selecting four orthogonal sequences in the set of orthogonal sequences as prescribed with the network side as the group of signature sequences; and
   decoding the received E-HICH of the type of scheduled transmission using the group of signature sequences and acquiring the corresponding feedback information.

6. The method of any one of claims 1 to 5, wherein:

   for non-scheduled transmission, the corresponding feedback information comprises ACK or NACK, TPC and SS; and

for semi-persistent transmission, if no EI information is carried on an E-AGCH and a physical resource of only one TTI is allocated to the UE, the corresponding feedback information comprises ACK or NACK; otherwise, the corresponding feedback information comprises ACK or NACK, TPC and SS.

7. A system for transmitting feedback information, the system comprises:

a channel allocation unit configured to allocate and notify an E-HICH of the type of scheduled transmission to a UE;

a feedback information transmission unit, for feedback of non-scheduled transmission or semi-persistent transmission for the UE, configured to carry corresponding feedback information on the E-HICH of the type of scheduled transmission in a feedback scheme of non-scheduled transmission; and

a group-of signature sequences determination unit configured to determine a group of signature sequences of non-scheduled transmissions;

wherein the feedback information transmission unit comprises:

an encoding sub-unit configured to encode the feedback information using the group of signature sequences in an encoding scheme for feedback of non-scheduled transmission; and

a carrying sub-unit configured to carry the encoded feedback information on the E-HICH of the type of scheduled transmission for transmission.

8. The system of claim 7, wherein the group of signature sequences determination unit comprises:

a set of groups of signature sequences determination sub-unit configured to determine, from all of E-PUCH resources in a cell, a corresponding set of E-HICH signature sequences in a feedback scheme of scheduled transmission and a set of groups of signature sequences in the feedback scheme of non-scheduled transmission, wherein the set of groups signature sequences corresponds to signature sequences other than the set of E-HICH signature sequences; and

a group of signature sequences allocation subunit configured to allocate to the UE a group of signature sequences in the set of groups of signature sequences.

9. The system of claim 8, further comprising:

a group of signature sequences notification unit configured to notify the UE of the group of signature sequences allocated by the group of signature sequences allocation sub-unit to the UE.

10. The system of claim 7, wherein the group of signature sequences determination unit comprises:

a set of orthogonal sequences determination sub-unit configured to determine, from a corresponding relationship between physical resources and orthogonal sequences for feedback of scheduled transmission, a set of orthogonal sequences corresponding to an allocated E-PUCH physical resource; and

a group of signature sequences selection subunit configured to select four orthogonal sequences in the set of orthogonal sequences as the group of signature sequences.

11. The system of any one of claims 7 to 10, wherein:

for non-scheduled transmission, the corresponding feedback information comprises ACK or NACK, TPC and SS; and

for semi-persistent transmission, if no EI information is carried on an E-AGCH and a physical resource of only one TTI is allocated to the UE, the corresponding feedback information comprises ACK or NACK; otherwise, the corresponding feedback information comprises ACK or NACK, TPC and SS.

12. A user equipment, the user equipment comprises:

a channel reception unit configured to receive an E-HICH of the type of scheduled transmission on which feedback information of non-scheduled transmission or semi-persistent transmission is carried;

a group of signature sequences acquisition unit configured to acquire as instructed from the network side a corresponding group of signature sequences of non-scheduled transmission; and

a decoding unit configured to decode the received E-HICH of the type of scheduled transmission using the group of signature sequences to acquire the corresponding feedback information of non-scheduled transmission or semi-persistent transmission.

13. The user equipment of claim 12, wherein the group of signature sequences acquisition unit comprises:

a determination sub-unit configured determine, from a corresponding relationship between physical resources and orthogonal sequences for feedback of scheduled transmission, a set of orthogonal sequences corresponding to an E-PUCH physical resource allocated from the network side; and

a selection sub-unit configured to select as prescribed with the network side four orthogonal sequences in the set of orthogonal sequences as the group of signature sequences.

**Patentansprüche**

1. Verfahren zum Übertragen von Rückkopplungsinformationen, in dem:

auf der Netzwerkseite ein E-HICH vom Typ einer getakteten Übertragung einem Endgerät zugewiesen und bekanntgegeben wird; und zur Rückkopplung einer nicht getakteten Übertragung oder einer semi-persistenten Übertragung für das Endgerät entsprechende Rückkopplungsinformationen auf dem E-HICH vom Typ einer getakteten Übertragung in einem Rückkopplungsschema einer nicht getakteten Übertragung befördert werden; wobei beim Befördern der entsprechenden Rückkopplungsinformationen auf dem E-HICH vom Typ einer getakteten Übertragung in dem Rückkopplungsschema einer nicht getakteten Übertragung:

Signatursequenzen getakteter Übertragungen und eine Gruppe von Signatursequenzen nicht getakteter Übertragungen festgelegt werden; und die Rückkopplungsinformationen unter Verwendung der Gruppe von Signatursequenzen in ein Kodierungsschema zum Rückkoppeln einer nicht getakteten Übertragung kodiert werden und die kodierten Rückkopplungsinformationen auf dem E-HICH vom Typ einer getakteten Übertragung zur Übertragung befördert werden.

2. Verfahren nach Anspruch 1, wobei beim Festlegen der Gruppe von Signatursequenzen:

auf der Netzwerkseite von allen physikalischen Ressourcen eines E-HICH in einer Zelle eine entsprechende Reihe von E-HICH Signatursequenzen in einem Rückkopplungsschema einer getakteten Übertragung und eine Reihe von Gruppen von Signatursequenzen in dem Rückkopplungsschema einer nicht getakteten Übertragung festgelegt wird, wobei die Reihe von Gruppen von Signatursequenzen den Signatursequenzen mit der Ausnahme der Reihe von E-HICH Signatursequenzen entspricht; und dem Endgerät eine Gruppe von Signatursequenzen in der Reihe von Gruppen von Signatursequenzen zugewiesen und bekanntgegeben wird.

3. Verfahren nach Anspruch 2, in dem ferner:

durch das Endgerät der empfangene E-HICH vom Typ einer getakteten Übertragung unter Verwendung der Gruppe von Signatursequenzen, wie sie von der Netzwerkseite bekanntgegeben wurden, dekodiert wird und die entsprechenden Rückkopplungsinformationen erhalten werden.

4. Verfahren nach Anspruch 1, wobei beim Festlegen der Gruppe von Signatursequenzen:

auf der Netzwerkseite aus einer entsprechenden Beziehung zwischen physikalischen Ressourcen und orthogonalen Sequenzen zur Rückkopplung einer getakteten Übertragung eine Reihe von orthogonalen Sequenzen festgelegt wird, die einer zugewiesenen physikalischen Ressource eines E-PUCH entsprechen; und vier orthogonale Sequenzen aus der Reihe orthogonaler Sequenzen als die Gruppe von Signatursequenzen ausgewählt werden.

5. Verfahren nach Anspruch 4, in dem ferner:

durch das Endgerät aus der entsprechenden Beziehung zwischen physikalischen Ressourcen und orthogonalen Sequenzen zur Rückkopplung einer getakteten Übertragung die Reihe orthogonaler Sequenzen festgelegt wird, die der zugewiesenen physikalischen Ressource eines E-PUCH entsprechen; vier orthogonale Sequenzen aus der Reihe orthogonaler Sequenzen, wie von der Netzwerkseite vorgeschrieben, als die Gruppe von Signatursequenzen ausgewählt wird; und der empfangene E-HICH vom Typ einer getakteten Übertragung unter Verwendung der Gruppe von Signatursequenzen dekodiert wird und die entsprechenden Rückkopplungsinformationen erhalten werden.

6. Verfahren nach einem der Ansprüche 1 bis 5, wobei:

für eine nicht getaktete Übertragung die entsprechenden Rückkopplungsinformationen ACK oder NACK, TPC und SS umfassen; und für eine semi-persistente Übertragung, falls keine EI-Informationen auf einem E-AGCH befördert werden und eine physikalische Ressource von lediglich einem TTI dem Endgerät zugewiesen ist, die entsprechenden Rückkopplungsinformationen ACK oder NACK umfassen; andernfalls, die entsprechenden Rückkopplungsinformationen ACK oder NACK, TPC und SS umfassen.

7. System zum Übertragen von Rückkopplungsinformationen, wobei das System umfasst:

eine Kanalzuweisungseinheit, die dazu ausgelegt ist, einen E-HICH vom Typ einer getakteten Übertragung einem Endgerät zuzuweisen und bekanntzugeben;
eine Rückkopplungsinformationsübertragungseinheit zur Rückkopplung einer nicht getakteten Übertragung oder einer semi-persistenten Übertragung für das Endgerät, die dazu ausgelegt ist, entsprechende Rückkopplungsinformationen auf dem E-HICH vom Typ einer getakteten Übertragung in einem Rückkopplungsschema einer nicht getakteten Übertragung zu befördern; und
eine Festlegeeinheit für eine Gruppe von Signatursequenzen, die dazu ausgelegt ist, eine Gruppe von Signatursequenzen nicht getakteter Übertragungen festzulegen;
wobei die Rückkopplungsinformationsübertragungseinheit umfasst:

eine Kodier-Untereinheit, die dazu ausgelegt ist, die Rückkopplungsinformationen unter Verwendung der Gruppe von Signatursequenzen in ein Kodierungsschema zur Rückkopplung einer nicht getakteten Übertragung zu kodieren; und
eine Beförderungsuntereinheit, die dazu ausgelegt ist, die kodierten Rückkopplungsinformationen auf dem E-HICH vom Typ einer getakteten Übertragung zur Übertragung zu befördern.

8. System nach Anspruch 7, wobei die Festlegeeinheit für eine Gruppe von Signatursequenzen umfasst:

eine Festlegeuntereinheit für eine Reihe von Gruppen von Signatursequenzen, die dazu ausgelegt ist, von allen Ressourcen eines E-PUCH in einer Zelle eine entsprechende Reihe von E-HICH Signatursequenzen in einem Rückkopplungsschema einer getakteten Übertragung und eine Reihe von Gruppen von Signatursequenzen in dem Rückkopplungsschema einer nicht getakteten Übertragung festzulegen, wobei die Reihe von Gruppen von Signatursequenzen Signatursequenzen mit der Ausnahme der Reihe von E-HICH Signatursequenzen entspricht; und
eine Zuweisungsuntereinheit für eine Gruppe von Signatursequenzen, die dazu ausgelegt ist, einem Endgerät eine Gruppe von Signatursequenzen aus der Reihe von Gruppen von Signatursequenzen zuzuweisen.

9. System nach Anspruch 8, ferner umfassend:

eine Bekanntgebeeinheit für eine Gruppe von Signatursequenzen, die dazu ausgelegt ist, dem Endgerät die Gruppe von Signatursequenzen bekanntzugeben, die dem Endgerät durch die Zuweisungsuntereinheit für die Gruppe von Signatursequenzen zugewiesen list.

10. System nach Anspruch 7, wobei die Festlegeeinheit für die Gruppe von Signatursequenzen umfasst:

eine Festlegeuntereinheit für eine Reihe von orthogonalen Sequenzen, die dazu ausgelegt ist, aus einer entsprechenden Beziehung zwischen physikalischen Ressourcen und orthogonalen Sequenzen zur Rückkopplung einer getakteten Übertragung, eine Reihe von orthogonalen Sequenzen, die einer zugewiesenen physikalischen Ressource eines E-PUCH entsprechen, festzulegen; und
eine Auswahluntereinheit für eine Gruppe von Signatursequenzen, die dazu ausgelegt, vier orthogonale Sequenzen aus der Reihe orthogonaler Sequenzen als die Gruppe von Signatursequenzen auszuwählen.

11. System nach einem der Ansprüche 7 bis 10, wobei:

für eine nicht getaktete Übertragung, die entsprechenden Rückkopplungsinformationen ACK oder NACK, TPC und SS umfassen; und
für eine semi-persistente Übertragung, falls keine EI-Informationen auf einem E-AGCH befördert werden und eine physikalische Ressource von lediglich einem TTI dem Endgerät zugewiesen ist, die entsprechenden Rückkopplungsinformationen ACK oder NACK umfassen; andernfalls, die entsprechenden Rückkopplungsinformationen ACK oder NACK, TPC und SS umfassen.

12. Endgerät, umfassend:

eine Kanalempfangseinheit, die dazu ausgelegt ist, einen E-HICH vom Typ einer getakteten Übertragung zu empfangen, auf dem Rückkopplungsinformationen von einer nicht getakteten Übertragung oder einer semi-persistenten Übertragung befördert werden;
eine Erfassungseinheit für eine Gruppe von Signatursequenzen, die dazu ausgelegt ist, wie von der Netzwerkseite instruiert, eine entsprechende Gruppe von Signatursequenzen einer nicht getakteten Übertragung zu erfassen; und

eine Dekodiereinheit, die dazu ausgelegt ist, den empfangenen E-HICH vom Typ einer getakteten Übertragung unter Verwendung der Gruppe von Signatursequenzen zu dekodieren, um die entsprechenden Rückkopplungsinformationen einer nicht getakteten Übertragung oder einer semi-persistenten Übertragung zu erlangen.

13. Endgerät nach Anspruch 12, wobei die Erfassungseinheit für die Gruppe von Signatursequenzen umfasst:

eine Festlegeuntereinheit, die dazu ausgelegt ist, aus einer entsprechenden Beziehung zwischen physikalischen Ressourcen und orthogonalen Sequenzen zur Rückkopplung einer getakteten Übertragung eine Reihe von orthogonalen Sequenzen festzulegen, die einer von der Netzwerkseite zugewiesenen physikalischen Ressource für einen E-PUCH entsprechen; und eine Auswahluntereinheit, die dazu ausgelegt ist, wie von der Netzwerkseite vorgeschrieben, vier orthogonale Sequenzen aus der Reihe orthogonaler Sequenzen als die Gruppe von Signatursequenzen auszuwählen.

**Revendications**

1. Procédé de transmission d'informations de rétroaction, le procédé consistant à :

affecter et notifier, du côté du réseau, un canal E-HIC du type de transmission planifiée, à un équipement UE ; et pour une rétroaction de transmission non planifiée ou de transmission semi-persistante pour l'équipement UE, transporter des informations de rétroaction correspondantes sur le canal E-HICH du type de transmission planifiée, dans un schéma de rétroaction de transmission non planifiée ; dans lequel le transport des informations de rétroaction correspondantes sur le canal E-HICH du type de transmission planifiée, dans le schéma de rétroaction de transmission non planifiée, consiste à :

déterminer des séquences de signature de transmissions planifiées et un groupe de séquences de signature de transmissions non planifiées ; et coder les informations de rétroaction en utilisant le groupe de séquences de signature dans un schéma de codage pour une rétroaction de transmission non planifiée, et transporter les informations de rétroaction codées sur le canal E-HICH du type de transmission planifiée en vue d'une transmission.

2. Procédé selon la revendication 1, dans lequel la détermination du groupe de séquences de signature consiste à :

déterminer, du côté du réseau, à partir de la totalité des ressources physiques de canal E-HICH dans une cellule, un ensemble correspondant de séquences de signature de canal E-HICH dans un schéma de rétroaction de transmission planifiée, et un ensemble de groupes de séquences de signature dans le schéma de rétroaction de transmission non planifiée, dans lequel l'ensemble de groupes de séquences de signature correspond à des séquences de signature distinctes de l'ensemble de séquences de signature de canal E-HICH ; et affecter et notifier, à l'équipement UE, un groupe de séquences de signature de l'ensemble de groupes de séquences de signature.

3. Procédé selon la revendication 2, consistant en outre à :

décoder, par le biais de l'équipement UE, le canal E-HICH reçu du type de transmission planifiée, en utilisant le groupe de séquences de signature tel que notifié par le côté réseau, et acquérir les informations de rétroaction correspondantes.

4. Procédé selon la revendication 1, dans lequel la détermination du groupe de séquences de signature consiste à :

déterminer, du côté du réseau, à partir d'une relation correspondante entre des ressources physiques et des séquences orthogonales pour une rétroaction de transmission planifiée, un ensemble de séquences orthogonales correspondant à une ressource physique de canal E-PUCH affectée ; et sélectionner quatre séquences orthogonales de l'ensemble de séquences orthogonales, en tant que le groupe de séquences de signature.

5. Procédé selon la revendication 4, consistant en outre à :

déterminer, par le biais de l'équipement UE, à partir de la relation correspondante entre les ressources physiques et les séquences orthogonales pour une rétroaction de transmission planifiée, l'ensemble de séquences orthogonales correspondant à la ressource physique de canal E-PUCH affectée ;

sélectionner quatre séquences orthogonales de l'ensemble de séquences orthogonales, tel que cela est prescrit par le côté du réseau, en tant que le groupe de séquences de signature ; et décoder le canal E-HICH reçu du type de transmission planifiée, en utilisant le groupe de séquences de signature, et acquérir les informations de rétroaction correspondantes.

6. Procédé selon l'une quelconque des revendications 1 à 5, dans lequel :

pour une transmission non planifiée, les informations de rétroaction correspondantes comportent un accusé ACK ou un accusé NACK, une commande TPC et une commande SS ; et pour une transmission semi-persistante, si aucune information EI n'est transportée sur un canal E-AGCH et si une ressource physique d'un seul intervalle TTI est affectée à l'équipement UE, les informations de rétroaction correspondantes comportent un accusé ACK ou un accusé NACK ; sinon, les informations de rétroaction correspondantes comportent un accusé ACK ou un accusé NACK, une commande TPC et une commande SS.

7. Système destiné à transmettre des informations de rétroaction, le système comportant :

une unité d'affectation de canal configurée de manière à affecter et notifier un canal E-HICH du type de transmission planifiée, à un équipement UE ;
une unité de transmission d'informations de rétroaction, pour une rétroaction de transmission non planifiée ou de transmission semi-persistante pour l'équipement UE, configurée de manière à transporter des informations de rétroaction correspondantes sur le canal E-HICH du type de transmission planifiée, dans un schéma de rétroaction de transmission non planifiée ; et
une unité de détermination de groupe de séquences de signature configurée de manière à déterminer un groupe de séquences de signature de transmissions non planifiées ;
dans lequel l'unité de transmission d'informations de rétroaction comprend :

une sous-unité de codage configurée de manière à coder les informations de rétroaction, en utilisant le groupe de séquences de signature, dans un schéma de codage pour une rétroaction de transmission non planifiée ; et
une sous-unité de transport configurée de manière à transporter les informations de rétroaction codées sur le canal E-HICH du type de transmission planifiée, en vue d'une transmission.

8. Système selon la revendication 7, dans lequel l'unité de détermination de groupe de séquences de signature comprend :

une sous-unité de détermination d'ensemble de groupes de séquences de signature configurée de manière à déterminer, à partir de la totalité des ressources de canal E-PUCH dans une cellule, un ensemble correspondant de séquences de signature de canal E-HICH dans un schéma de rétroaction de transmission planifiée, et un ensemble de groupes de séquences de signature dans le schéma de rétroaction de transmission non planifiée, dans lequel l'ensemble de groupes de séquences de signature correspond à des séquences de signature distinctes de l'ensemble de séquences de signature de canal E-HICH ; et
une sous-unité d'affectation de groupe de séquences de signature configurée de manière à affecter, à l'équipement UE, un groupe de séquences de signature de l'ensemble de groupes de séquences de signature.

9. Système selon la revendication 8, comprenant en outre :

une unité de notification de groupe de séquences de signature configurée de manière à notifier, à l'équipement UE, le groupe de séquences de signature affecté par la sous-unité d'affectation de groupe de séquences de signature à l'équipement UE.

10. Système selon la revendication 7, dans lequel l'unité de détermination de groupe de séquences de signature comprend :

une sous-unité de détermination d'ensemble de séquences orthogonales configurée de manière à déterminer, à partir d'une relation correspondante entre des ressources physiques et des séquences orthogonales pour une rétroaction de transmission planifiée, un ensemble de séquences orthogonales correspondant à une ressource physique de canal E-PUCH affectée ; et
une sous-unité de sélection de groupes de séquences de signature configurée de manière à sélectionner quatre séquences orthogonales dans l'ensemble de séquences orthogonales en tant que le groupe de séquences de signature.

11. Système selon l'une quelconque des revendications 7 à 10, dans lequel :

pour une transmission non planifiée, les informations de rétroaction correspondantes comportent un accusé AC ou un accusé NACK, une commande TPC et une commande SS ; et

pour une transmission semi-persistante, si aucune information EI n'est transportée sur un canal E-AGCH et si une ressource physique d'un seul intervalle TTI est affectée à l'équipement UE, les informations de rétroaction correspondantes comportent un accusé ACK ou un accusé NACK ; sinon, les informations de rétroaction correspondantes comportent un accusé ACK ou un accusé NACK, une commande TPC et une commande SS.

12. Équipement d'utilisateur, l'équipement d'utilisateur comportant :

une unité de réception de canal configurée de manière à recevoir un canal E-HICH du type de transmission planifiée sur lequel des informations de rétroaction de transmission non planifiée ou de transmission semi-persistante sont transportées ;
une unité d'acquisition de groupe de séquences de signature configurée de manière à acquérir, selon les instructions du côté du réseau, un groupe correspondant de séquences de signature de transmission non planifiée ; et
une unité de décodage configurée de manière à décoder le canal E-HICH reçu du type de transmission planifiée, en utilisant le groupe de séquences de signature, en vue d'acquérir les informations de rétroaction correspondantes de transmission non planifiée ou de transmission semi-persistante.

13. Équipement d'utilisateur selon la revendication 12, dans lequel l'unité d'acquisition de groupe de séquences de signature comprend :

une sous-unité de détermination configurée de manière à déterminer, à partir d'une relation correspondante entre des ressources physiques et des séquences orthogonales pour une rétroaction de transmission planifiée, un ensemble de séquences orthogonales correspondant à une ressource physique de canal E-PUCH affectée par le côté du réseau ; et
une sous-unité de sélection configurée de manière à sélectionner, tel que cela est prescrit par le côté du réseau, quatre séquences orthogonales de l'ensemble de séquences orthogonales, en tant que le groupe de séquences de signature.

Fig.1

Fig.2

Allocate and notify at the network side an E-HICH of the type of scheduled transmission to a UE ⌐301

Determine, from all of E-PUCH resources in a cell, a corresponding set of E-HICH signature sequences in a feedback scheme of scheduled transmission and a set of groups of signature sequences in a feedback scheme of non-scheduled transmission where the set of groups of signature sequences corresponds to signature sequences other than the set of E-HICH signature sequences ⌐302

Allocate and notify a group of signature sequences in the set of groups of signature sequences to the UE ⌐303

For feedback of non-scheduled transmission or semi-persistent transmission for the UE, encode feedback information of non-scheduled transmission or semi-persistent transmission using the group of signature sequences on the E-HICH of the type of scheduled transmission in an encoding scheme for feedback of non-scheduled transmission ⌐304

Carry the encoded feedback information on the E-HICH of the type of scheduled transmission for transmission ⌐305

Fig.3

Allocate and notify at the network side an E-HICH of the type of scheduled transmission to a UE  401

For feedback of non-scheduled transmission or semi-persistent transmission for the UE, determine, from a corresponding relationship between physical resources and orthogonal sequences for feedback of scheduled transmission, a set of orthogonal sequences corresponding to an allocated E-PUCH physical resource  402

Select four orthogonal sequences in the set of orthogonal sequences as a group of signature sequences  403

Encode feedback information of non-scheduled transmission or semi-persistent transmission using the group of signature sequences on the E-HICH of the type of scheduled transmission in an encoding scheme for feedback of non-scheduled transmission  404

Carry the encoded feedback information on the E-HICH of the type of scheduled transmission for transmission  405

Fig.4

502

501

Feedback information
transmission unit

522

Channel
allocation unit

Carrying sub-unit

521

Encoding sub-unit

503

Group of signature
sequences determination unit

Fig.5

602

601

Group of signature
sequences acquisition uni

621

Channel
reception unit

Determination sub-unit

622

Selection sub-unit

603

Decoding unit

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810239864

**Non-patent literature cited in the description**

- **CATT et al.** Addition of signature sequence group information for the E-HICH related to non-scheduled transmission in 1.28Mcps TDD mode. *3GPP DRAFT; R2-071348*

- **TD TECH et al.** TR25.929 Text proposal on Uplink transmission Simulation and Explicit. *3GPP DRAFT; R1-084147*